Europäisches Patentamt

European Patent Office

Office européen des brevets

(11) Publication number: **0 492 784 A2**

# EUROPEAN PATENT APPLICATION

(21) Application number: **91310181.2**

(22) Date of filing: **04.11.91**

(51) Int. Cl.⁵: **B29D  30/08**

(30) Priority: **28.12.90 JP 415499/90**

(43) Date of publication of application:
**01.07.92 Bulletin  92/27**

(84) Designated Contracting States:
**DE ES FR GB IT**

(71) Applicant: **Bridgestone Corporation**
**10-1, Kyobashi 1-Chome Chuo-Ku**
**Tokyo 104(JP)**

(72) Inventor: **Kobayashi, Norio**
**1 19, Ogawahigashi-cho**
**Kodaira-shi, Tokyo(JP)**
Inventor: **Ando, Kunihito**
**1562-17, Ninomiya**
**Akikawa-shi, Tokyo(JP)**
Inventor: **Sato, Kenjiro**
**686-20, Nishiterakata-cho**
**Hachioji-shi, Tokyo(JP)**

(74) Representative: **Silverman, Warren et al**
**HASELTINE LAKE & CO. Hazlitt House 28**
**Southampton Buildings Chancery Lane**
**London WC2A 1AT(GB)**

(54) **Pneumatic tyre and method for manufacturing the same.**

(57) In the manufacture of a pneumatic tyre the opposite sides of a carcass (1) are folded back so as to wrap around a pair of left and right bead cores (3). The carcass is vulcanized or semi-vulcanized while thus shaped by making use of an unpatterned metal mould to form a first case (6). The first case is ready to receive a patterned annular tread (10) produced by vulcanization or semi-vulcanization-moulding by making use of an appropriately patterned metal mould. An unvulcanized belt (9) is disposed at the outer circumferential portion of the first case (6) , and unvulcanized rubber sheets (8) are disposed at the shoulder portions of the first case (6). The annular tread (10) is disposed at the outer circumferential portion of the first case (6) and unvulcanized side walls (7) are disposed at the side of the portions of the first case (10). The thus assembled members are then shaped by undergoing vulcanization in a generally unpatterned metal mould.

This invention relates to a pneumatic tyre that possesses excellent uniformity and to a method for the manufacture thereof.

In general, a radial tyre is manufactured by the steps of assembling constituent members such as beads, carcass, side walls and the like, inflating the assembly into a toroidal shape, thereafter sticking on a belt and a tread rubber to form an unvulcanized green tyre, and vulcanizing this green tyre in a metal vulcanization mould.

Due to the fact that unvulcanized constituent members are being first assembled and then the configuration of the assembly is changed from a cylindrical shape to a toroidal shape and further owing to the shape of a metal mould, there has always been a problem that the required uniformity of the tyre being produced is not attained because cords buried in cord-reinforced sheet material such as the belt become disorganized, undulations are generated in the cords on formation of a tread pattern, or variation occurs in the thickness of the tread.

Hence, attempts for improving uniformity of a tyre have been heretofore made. Thus Japanese Laid-Open Patent Specification No. 1-255529 (1989) describes a method of vulcanizing an annular belt layer and, after assembling it with for example an unvulcanized case and a tread rubber, revulcanizing the assembly. A method of vulcanizing an assembly of a carcass layer including side walls with a belt layer, and after assembling an unvulcanized tread with the assembly, revulcanizing the same is described in Japanese Laid-Open Patent Specification No. 63-72510 (1988). A method of assembling a belt layer with a carcass layer including side walls, vulcanizing the assembly, and after wrapping a belt-shaped tread around the assembly, revulcanizing the same is known from Japanese Laid-Open Patent Specification No. 1-320141 (1989).

However, in the methods of assembling for example a belt and a tread with an unvulcanized case (a carcass layer or the like) and vulcanizing the assembly (Japanese Laid-Open Patent Specifications Nos. 1-255529 (1989) and 54-124082 (1979), it is impossible to work while measuring runout of the case itself, and hence it is difficult to maintain a good runout. Hence the case may be assembled with the tread while being kept distorted, and in some cases, this will itself militate against obtaining uniformity of the finally produced tyre.

Also, when assembling an unvulcanized tread with a case and then revulcanizing (Japanese Laid-Open Patent Specifications Nos. 1-255529 (1989) and 63-72510 (1988), problems accompany the variation which will arise out of the wall thickness change accompanying the deformation from a toroidal shape to the shape of a metal mould upon revulcanization shaping, resulting in deterioration of uniformity, or waves being generated in the cords of the belt due to biting of a pattern on a patterned metal mould.

Furthermore, when assembling a belt layer with a carcass layer to be vulcanized, and after assembling a separately vulcanized tread with the vulcanized assembly and revulcanizing the same (Japanese Laid-Open Patent Specification No. 1-320141 (1989)), since a belt layer and a tread are assembled after having been vulcanized, it is difficult to change the diameter of the vulcanized belt layer. Accordingly a tread already formed into a belt-like shape must be wrapped around the outer circumference of the belt layer. In this case it is difficult to perform accurately joining of the lead end and the trailing end of the tread. The tread may become partly stretched resulting in there being a reduction in thickness, or the joined portions may overlap resulting in increasing of thickness. Thus overall, it is difficult to attain good uniformity of the tyre.

It is an object of the present invention to provide a method for manufacturing a pneumatic tyre which can lead to an improvement in uniformity of the pneumatic tyre.

According to the present invention, there is provided a method for manufacturing a pneumatic tyre; characterized by the steps of producing a first case by vulcanization-moulding or semi-vulcanization-moulding a carcass using an unpatterned metal mould and with the opposite edges of the carcass being folded back to wrap around a pair of left and right bead cores; providing a patterned annular tread which has been vulcanization-moulded or semi-vulcanization-moulded in a patterned metal mould; disposing an unvulcanized belt at the outer circumferential portion of said first case, unvulcanized rubber sheets at shoulder portions of the first case said annular tread at the outer circumferential portion of the first case, and unvulcanized side walls at the side portions of the first case and vulcanization-moulding the assembly thus formed in a metal mould.

In practising the present invention, since the first case only is vulcanized or semi-vulcanized prior to carrying out the process, measurement of a runout of a first case itself is possible, and hence, by working on the basis of such measurement, the uniformity of the runout of the first case itself can be maintained at a high level. In addition, since a patterned tread is preliminarily produced in an annular shape by vulcanization or semi-vulcanization, a tread having a uniform wall thickness can be obtained.

As the above-described vulcanization-moulded or semi-vulcanization-moulded first case does not have a belt wrapped therearound while the latter is in a vulcanized condition, the outer diameter of the first case can be varied by elastic deformation. Hence it can be easily fitted to the inner periphery of the above-mentioned annular tread via an unvulcanized belt in a mutually optimum positional relationship, and eventually, manufacture of a tyre having extremely high uniformity is made possible.

In addition, owing to the fact that unvulcanized side walls are used in the final revulcanization in a metal mould which is preferably unpatterned, indication of sizes and the like is possible on the side walls, and a vulcanization-moulded first case in common to many tyre types can be used.

For a better understanding of the invention and to show how the same can be carried into effect, reference will now be made by way of example only, to the accompanying drawings wherein:

Figure 1 is a schematic cross-sectional view showing a tyre after a first shaping operation in its manufacture according to the process of the present invention;

Figure 2 is a cross-sectional view of the tyre shape of Figure 1 obtained after vulcanization;

Figure 3 is a cross-sectional view of a part of an injection moulding apparatus for use in carrying out the method of this invention;

Figure 4 is a schematic view showing a tyre after a second shaping operation in its manufacture according to the process of this invention; and

Figure 5 is a cross-sectional view of a manufactured tyre after final vulcanization.

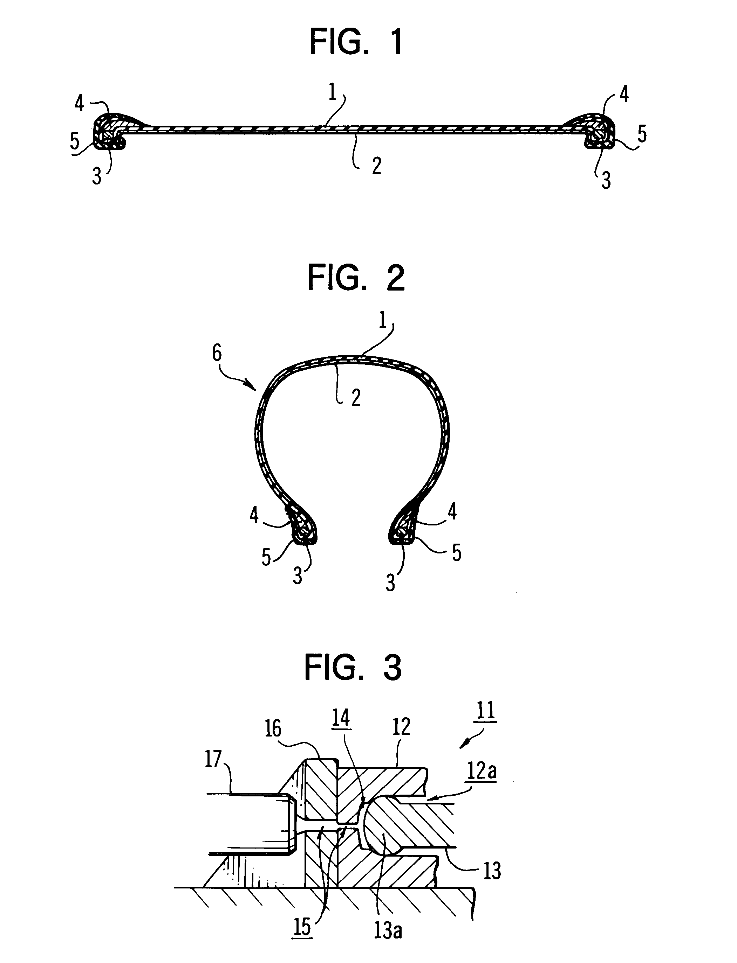

Referring to the drawings, Figure 1 shows the state of development of a tyre after a first shaping operation. A carcass layer 1 has been given a cylindrical shape on a shaping drum with an inner liner 2 being placed on the inside of carcass layer 1. The opposite edge portions of carcass layer 1 are folded back so as to envelop annular bead cores 3 and bead fillers 4. To the outside of the folded-back portions are stuck rubber chafers 5.

When such cylindrical member is vulcanization-moulded within an unpatterned metal mould on bringing its opposite ends close to each other while inflating it by means of high-temperature steam pressure acting on its inside, a first case 6 of toroidal shape as shown in Figure 2 is formed.

Since this first case 6 has been vulcanized, the runout of the first case 6 can be measured. Hence by buffing the case or adding unvulcanized rubber sheets on the basis of the results of measurement, the runout of the case obtained at this stage can be improved.

Likewise, the joining surfaces at the outer circumference of the first case 6 are kept roughened by means of a buffing arrangement or the like.

Separately, a tread is vulcanization-moulded by means of an injection moulding apparatus.

Figure 3 shows an essential part of a suitable injection moulding apparatus, in which there are provided an outer mould member 12 of annular shape and having a recess 12a formed along its inner circumference and an inner mould member 13 of disc shape with its circumferential edge portion inflated to form an inflated portion 13a. The inflated portion 13a at the circumferential edge of the inside mould member 13 fits into the recess 12a of the outside mould member 12, and a space 14 for forming a tread is provided between the two mould members.

On the bottom surface of the recess 12a of the outer mould member 12 are formed protrusions corresponding to a tread pattern, injection holes 15 opening out at a number of locations on the same bottom surface being drilled through the outer mould member 12 and through a mounting member 16 for supporting the outer mould member 12 on its exterior. An injection machine 17 has its nozzle shown attached to an injection hole 15.

Accordingly, if green rubber is injected from the injection machine 17 through the injection holes 15 into the space 14 and thus injection moulding is effected, an annular tread having the same shape as the mould is formed, and this annular tread is extremely uniform in wall thickness over its entire circumference.

The annular tread produced by injection moulding has a wall thickness far more uniform than one formed by extrusion shaping, and also, when a belt-shaped tread has been wrapped on a belt layer in an annular shape and then vulcanization-moulded by means of a patterned metal mould as is the case with the prior art, the disadvantage that protrusions of the pattern would form waves in the belt layer does not occur.

The annular tread formed by injection-moulding in the above-described manner and having excellent runout, has its wall thickness preliminarily measured over its entire circumference.

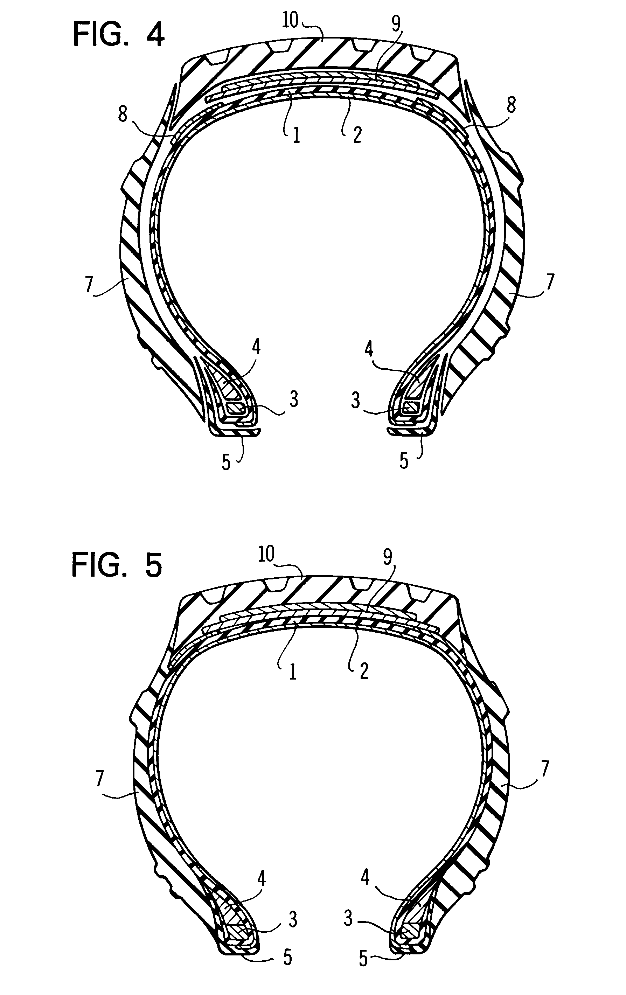

Before further assembly of a tyre to achieve the result shown in Figure 4, an unvulcanized annular belt layer 9 is stuck onto the inner circumferential surface of this annular tread, shown at 10 in Figure 4, to adhere thereto.

Since the annular belt layer 9 is in an unvulcanized state, it is possible to insert and fit the belt layer 9 having an outer diameter somewhat less than the inner diameter of the annular tread 10 to the inside of the annular tread 10 and to expand slightly the diameter of the belt layer 9 in so doing, and through such a simple method, the belt layer 9 can be stuck to the inner circumferential surface of the annular tread 10.

It is to be noted that by uniformly roughening the inner circumferential surface of the annular tread 10 preliminarily by means of a buffing device or the like, sticking of the belt layer 9 is enhanced.

Next, a second moulding is to be effected. Initially the toroidally-shaped first case 6 of Figure 2 is positioned on the inside of the annular tread 10 which now has the belt layer 9 stuck thereto. Unvulcanized rubber sheets 8 will have been stuck respectively to the left and right shoulder portions of the toroidally shaped first case 6 at positions corresponding to the inner circumferential surface portions of the annular tread 10 so as to extend beyond the belt layer 9 (See Figure 4).

Since the first case 6 has elasticity in its vulcanized condition and the belt layer 9 is not yet attached to its other circumference, it can be easily deformed resiliently and can change its outer diameter by adjusting pressure therewithin and leg width (bead distance).

Accordingly, by reducing the outer diameter of the first case 6, it can be easily fitted within the curvature of the annular tread 10.

At the time of this second moulding, since the runout of the first case 6 and the wall thickness of the annular tread 10 over its entire circumference have been already measured, these two elements are assembled after positioning (matching) such that thin wall-thickness portions of the annular tread 10 may align with the portions of the first case 6 having a large runout.

In this way, it is possible to further improve the overall uniformity after the assembly.

In addition, between the vulcanized first case 6 and annular tread 10, are positioned the unvulcanized belt layer 9 and rubber sheets 8. Vulcanized members do not come into direct contact with each other, and so, faults relating to bonding would not arise.

Side walls 7 are stuck to the left and right lateral portions of the assembly produced with the annular tread 10 assembled on the outer circumference of the first case 6 in the above described manner. The assembly of all the tyre constituent members is finished, and a green tyre is produced.

By vulcanizing such green tyre in an unpatterned metal mould or the like, a tyre as shown in Figure 5 can be manufactured.

While a tyre internal pressure is applied upon vulcanization, there is not always a need for a bladder to be present during vulcanization.

Finally when this vulcanization is complete, an indication of tyre size and the like is stamped on the side wall with a die.

To confirm the uniformity of a tyre manufactured in the above-described manner, a comparison test with a tyre manufactured by a method according to the prior art was carried out. Assuming that the values for the prior art tyre are 100, the tyre manufactured according to the above-described preferred embodiment indicated values of RFV (Radial Force Variation) of 35, LFV (Lateral Force Variation) of 70 and runout RR of 40.

Here, RFV means variation of resistance force in the vertical direction (radial direction) of a tyre, and LFV means variation of a resistance force in the horizontal direction (widthwise direction) of a tyre).

The test results with the tyre of the invention are far superior to those of the prior art. Remarkable improvements are observed especially, with respect to RFV and RR.

In addition, after trial manufacture of a tyre, adhesion tests between constituent members of the tyre, that is, between the tread 10 and the belt layer 9, between the belt layer 9 and the first case 6, between the first case 6 and the side walls 7, and between the side walls 7 and the tread 10 were conducted.

The tyre according to the present invention maintains a peeling resistance of about 80% as compared to the tyre in the prior art which was manufactured by vulcanization-moulding an assembly of unvulcanized constituent members. However, even when dynamic fatigue took place, peeling or separation of members did not occur. Even upon carrying out adhesion testing after dynamic fatigue had occurred, no breaks occurred at a boundary surface or at a bonded boundary surface between rubber and rubber. Cohesive failure, that is breakup at an inner portion of a rubber layer occurred, and it was confirmed, that, with regard to bonding force, there was no problem.

In addition, since the side walls 7 are assembled with the first case 6 in a non-vulcanized condition and indications of sizes and the like are stamped with dies after vulcanization, a single type of first case 6 itself can be used in manufacture of many kinds of tyres. Thus the method of the invention has flexibility, and leads to saving of working steps and hence installation and operational costs.

As will be apparent from the detailed description of the preferred embodiment above, owing to the fact that when carrying out the method according to the present invention a first case and an annular tread are separately vulcanization-moulded or, at least, semi-vulcanization-moulded, they can individually maintain high uniformity, and this uniformity is carried through to a tyre manufactured eventually therefrom, thus leading to improved product.

Since a belt layer is interposed between the first case and the annular tread and is in an unvulcanized condition, the assembling of the tyre is simple, and the processing steps can be simplified.

Also, since unvulcanized belt layer and rubber sheets are interposed between the first case and the annular tread which are both in a vulcanized state and are revulcanized, bonding between members is excellent.

Furthermore, as an indication of sizes and of other information can be given on the side walls upon vulcanization, a single type of first case can be used for many kinds of tyres, resulting in a saving of processing steps and of installation costs.

## Claims

1. A method for manufacturing a pneumatic tyre; characterized by the steps of producing a first case (6) by vulcanization-moulding or semi-vulcanization-moulding a carcass (1) using an unpatterned metal mould and with the opposite edges of the carcass being folded back to wrap around a pair of left and right bead cores (3); providing a patterned annular tread (10) which has been vulcanization-moulded or semi-vulcanization-moulded in a patterned metal mould; disposing (i) an unvulcanized belt (9) at the outer circumferential portion of said first case (6), (ii) unvulcanized rubber sheets (8) at shoulder portions of the first case (6), (iii) said annular tread (10) at the outer circumferential portion of the first case (6), and (iv) unvulcanized side walls (7) at the side portions of the first case (6) and vulcanization-moulding the assembly thus formed in a metal mould.

2. A method according to Claim 1, wherein the metal mould in which the assembly is vulcanized is unpatterned.

# FIG. 1

# FIG. 2

# FIG. 3

FIG. 4

FIG. 5